# EUROPEAN PATENT APPLICATION

(11) **EP 1 926 190 A1**
(43) Date of publication of application: **28.05.2008**
(21) Application number: 07121087.6
(22) Date of filing: 20.11.2007
(51) Int. Cl.: H02B 1/22

(54) **Control panel system with redundancy**

(30) Priority: 22.11.2006 DE 102006054940
(71) Applicant: Ormazabal Anlagentechnik GmbH, 47804 Krefeld (DE)
(72) Inventor: Glasmacher, Peter, 41352 Korschenbroich (DE)
(74) Representative: Cohausz & Florack

(57) **Abstract**

The present invention relates to a control panel configuration for medium- and/or high voltage, comprising a first control panel and at least a further control panel, whereby each of the first and of the at least one further control panel at least a current lead, at least an electrical switching element, at least an electrical nodal point, and at least respectively comprises a current output connected with one of the at least one first electrical nodal point, whereby each of the at least one electrical switching element is connected with respectively one of the at least one current lead and with respectively one of the at least one electrical nodal point, and whereby each of the at least one current output of the at least one further control panel is connected with respectively one electrical nodal point of the at least one electrical nodal point of the first control panel, and whereby the first control panel at least comprises a current transformer for determining at least one current flowing through the at least one first current output of the first control panel, whereby at least one of the at least one current lead is at least one bus bar, and wherein at least one of the at least one bus bar of the first control panel with respectively one of the at least one bus bar of the at least one further control panel depicts a double bus bar.

## Description

### INTRODUCTION

The present invention relates to a control panel configuration for medium and/or high voltage.

### STATE OF THE ART

Double bus bar concepts are commonly implemented by means of two control panels, which are arranged back-to-back, whereby one first of two control panels comprises current output and in normal operation it is fed by a bus bar located in the first control panel, and whereby, for instance, in case this current output fails, one of the first control panels can be supplied with current from a second bus bar from the second control panel.

This back-to-back solution requires specially formed control panels, for which individual type-approval tests are necessary respectively. Furthermore, the back-to-back configuration strongly delimits the spatial design possibilities of the control panel configuration.

### DESCRIPTION OF THE INVENTION

The object of the invention is hence to provide a control panel configuration with redundancy with simultaneous improvement of spatial arrangement possibilities for the control panel. Further, the task of the invention is also to implement this control panel configuration with minimum of expenditure. The task is solved by means of a control panel configuration comprising a first control panel and at least a further control panel, whereby each of the first and of the at least further control panel comprises at least a current supply, at least an electrical switching element, at least an electrical nodal point, and at least a current output connected respectively with at least a first electrical nodal point, whereby each of the at least electrical switching elements is connected with respectively at least one of the current lead and with respectively at least an electrical nodal point, and whereby each of the at least one current output of the at least one further control panel is connected with an electrical nodal point respectively, at least one electrical nodal point of control panel, and whereby the first control panel at least comprises a current transformer for determining at least a first current output flowing at least from a first current output of the first control panel, whereby at least one of the at least one current lead is at least one bus bar, and wherein at least one of the at least one bus bar of the first control panel with respectively one of the at least one bus bar of the at least one further control panel depicts a double bus bar.

The at least one current lead of the first control panel can e.g. depict exactly a bus bar, for instance in a single-phase system, or also several bus bars, e.g. three bus bars for a control panel in a three-phase alternating current system. This equally applies also to at least a current lead of one of the control panels of the at least one further control panel.

Furthermore, at least one of the at least one first switching elements can depict a circuit breaker, whereby one of the at least one circuit breakers can respectively connect or disconnect one of the at least one current lead with respectively one of the at least one first electrical nodal points.

The control panel configuration can be for instance a control panel configuration for a single-phase system, or a control panel configuration for a multiphase system like, e.g., a three-phase system.

For instance, a first current lead of at least a current lead of the first control panel can be connected electrically to a first electrical switching element of the at least one electrical switching element with a first electrical nodal point of the at least one electrical nodal point, and for instance a respectively first current lead of the respectively at least one current lead of the at least one further control panel can be connected electrically via respectively a first electrical switching element of the respectively at least one electrical switching element with respectively one first electrical nodal point of the at least one electrical nodal point of the respective control panel, whereby each of these first electrical nodal points of the at least one further control panel can be connected electrically via the respective current output with the one first electrical nodal point of the first control panel. Therefore, for instance, with the first switching element of the first control panel, the first current lead can be connected electrically with the first electrical contact of the first electrical switching element, so that an electrical current can flow from this first current lead via this first electrical nodal point to the electrical current output connected with it, in the following it is termed as the first current output, whereas, for instance, at the same time, each of the first electrical switching elements of the at least one further control panel can disconnect the respectively assigned first current lead of the respective further control panel from the respective first electrical nodal point, so that this is at least not electrically connected to a first current lead of the at least one further control panel with the first electrical nodal point of the first control panel.

The at least one further control panel can therefore, for instance, take over the function as at least a further redundant control panel for current supply. For instance, in the event that the current supply via the first current lead of the first control panel fails, e.g., owing to maintenance reasons or caused by malfunction, one of the further first current supplies from one control panel of the at least one further control panel can be switched by the respective electrical switching element to the first electrical nodal point of this one control panel, so that now the first electrical nodal point of the first control panel can be fed with current from the first current lead of the one control panel from the at least one further control panel. As such, e.g., the first current lead of the first control panel can be a first bus bar, and the first current lead of one of the further control panels can likewise be a bus bar, so that these two bus bars form a double bus bar. For more than two control panels, for instance, also triple bus bar or multiple bus bars of higher order can be formed.

Furthermore, a first current transformer of the at least one current transformer can be used for determining the current flowing through the current output, whereby for instance the first current output can comprise one or several cables and the first current transformer depicts a cable gland transformer for one or several cables. This cable gland transformer, for instance, can be based on electromagnetic induction, whereby, e.g., the current output depicts the primary side, and this current output flows through the secondary side, which can be formed, e.g., in annular shape, so that the secondary side of the cable gland transformer induces a current proportional to the current flowing through the first current output. The winding ratio, i.e. the number of windings on the secondary side can depend individually on the configuration, e.g. maximum currents. For instance, on the first cable gland transformer, a shunt resistor can be connected, through which a voltage drops in proportion to the current flowing through the first current output.
Also other current transformers can be used, however, for determining the current, e.g., bushing-type transformers, bushing-type current transformers, support-type current transformers, mounting-type current transformer, cable alteration current transformer, whereby all the above mentioned current transformers can be used both in single-phase as well as in multiphase, e.g. three-phase, version.

The current determined from the first current transformer can be used, for instance, for over-current detection, whereby, e.g., the at least one first electrical switching element through which the current flows via the first current output separates the connection from the respective first current lead, so that in cases of over-current flowing through the first current output it can switch off this current, and hence, for instance, damages in the control panels or to connected cables and/or bus bars and other electrical components can be avoided or reduced.

For instance, the switching system configuration can comprise a central control unit for controlling the electrical switching elements of the first and of the at least one further electrical control panel, which e.g. is placed in the first control panel, however, a disconnect control unit can be placed in each of the control panels.

Hence, e.g. the first current transformer with the one central control unit and/or with further disconnecting control units can be connected so that for instance through the central control unit and/or disconnect control units, the corresponding electrical switching elements can be switched off.

The first current transformer can be used also for other purposes, e.g. for determining the current conducted away via the first current output and thus, for instance, the power delivered via the first current output and/or for further control functions.

Also the first current output of the at least one further control panel, which is connected with the first nodal point of the first control panel can comprise one or several cables, which, for instance, can depend on the magnitude of current flowing via the respective first current output.

The first electrical nodal point of the at least one further control panel can, for instance, only be connected with the respective first switching element and the first current output, however, other electrical connections to other electrical elements can also exist.

For instance, an extending circuit breaker can be provided on one or several of the first electrical switching elements of the first control panel and of the at least one further control panel, which can be pushed into and again pulled out of the respective control panel. The circuit breaker can thus be exchanged quickly.

Furthermore, the first control panel and at least one of the at least one further control panel can be of the same or similar type, so that for the first control panel and at least one of the at least one further control panel, only one type approval test is required. Therefore, for instance, with the solution according to the invention, redundant control panels in one control panel configuration can be realised, whereby only one type approval test is needed for the respective control panels, which leads to substantial cost reduction. Furthermore, for instance, the circuit breaker between different control panels can be exchanged so that, e.g. in the event of failure of a circuit breaker, it can be replaced by a circuit breaker of a further control panel just not being needed. Thus, the operational availability of a control panel configuration can be increased.

The first control panel and/or the at least one further control panel can also be dimensioned for more than one phase, so that e.g. besides the initially described first current lead, a three-phase system of the first control panel can comprise the first electrical switching element, the first electrical nodal point, the first current output and the first current transformer for which further phases respectively a second or third current lead, a second or a third electrical switching element, a second or third electrical nodal point, a second or a third current output and a second or third current transformer, whereby the initially described embodiments and advantages about the first current lead, the first electrical switching element, the first electrical nodal point, the first current output and the first current transformer equally apply to the corresponding "second" or "third" elements for the second or third phase. Equivalently, also each of the at least one further control panel besides the "first" elements for the first phase can comprise the corresponding "second" and/or "third" elements for the second or third phase, whereby here also the initially described embodiments for the first "elements" equally apply to the corresponding "second" and/or "third" elements.

The first control panel and/or the at least one further control panel can be air-insulated, for instance, or insulated, e.g. SF₆, but can also be insulated with other means, e.g. liquids or solid materials.

For instance, the switching system configuration can be located in a transforming station, or in a distributing station or similar station.

The first control panel and at least one of the at least a further control panels can be set up at a certain distance from one another. Therefore, great design possibilities for placing the control panels of the control panel configuration exist, since they must not be directly adjacent to one another.

A design of the invention provides that the at least one electrical switching element is at least a circuit breaker.

A design of the invention provides that at least one of the at least one circuit breakers can be pulled out of and pushed into the respective control panel.

A design of the invention provides that at least one of the at least one current transformers is located on a bottom side of the first control panel and is supported in a swivelling manner on the control panel, so that the at least one of the at least one current transformers is outside of the control panel in a first swivelled-out state, and in a second swivelled-in state within the control panel. Therefore, this design of the invention is suitable, for instance, for a control panel transport, since the at least one current transformer can be positioned in a well-protected position during transport, i.e., the second swivelled-in state.

A design of the invention provides that at least one of the at least one current outputs is at least a cable or is at least a bus bar.

A design of the invention provides that at least one of the at least one current transformers is a cable gland transformer, through which at least a current output of the first control panel is fed.

A design of the invention provides that the first control panel and at least one of the at least one further control panel are arranged separately from one another.

### SHORT DESCRIPTION OF THE FIGURES

The invention is illustrated in detail in the following passage, based on the drawings with exemplary embodiments.

The figures show:
Fig. 1: A schematic illustration of a first exemplary embodiment of the control panel configuration;
Fig. 2: A schematic illustration of a second exemplary embodiment of the control panel configuration;

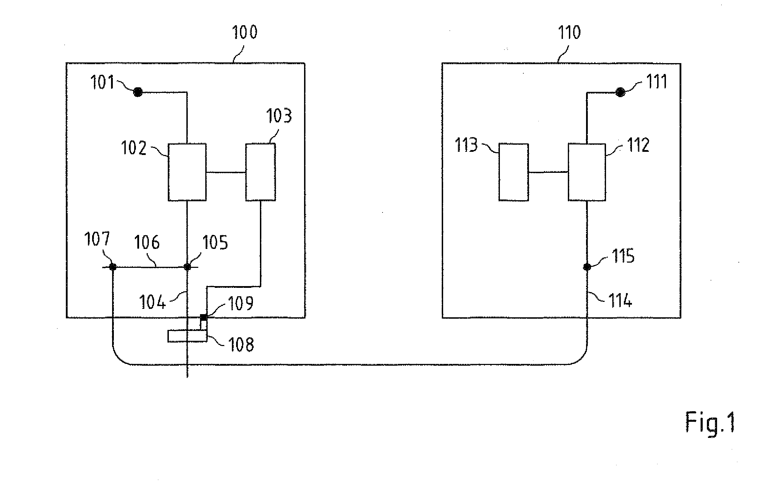

Figure 1 shows a schematic illustration of a first exemplary embodiment of the control panel configuration according to the invention for medium and/or high voltage, whereby the control panel configuration comprises a first control panel 100 and at least a further control panel 110.

The first control panel comprises at least a first current lead 101, e.g., which can be at least a first bus bar 101, at least a first electrical switching element 102, at least a first electrical nodal point 105, at least a first current output 104 and at least a first current transformer 108.

The first electrical switching element 102, e.g., can be a circuit breaker, and the first electrical switching element 102 can connect or disconnect the first current lead 101 with the first electrical nodal point 105, so that for instance in a first state of the first electrical switching element 102 an electrical connection occurs between the first current lead 101 and the first electrical nodal point 105, and in a second state this electrical connection is disconnected. Furthermore, the first control panel can comprise a control unit 103, with which the first electrical switching element 102 can be driven and thus controlled in the first or second state. The first electrical switching element 102 for instance can also be switched manually.

Therefore, by means of the first electrical switching element 102 the first current lead 101 of the first control panel 100 can be switched via the first electrical nodal point 105 to the first current output 108 of the first control panel 100. The first current output 108 for instance can depict one or several cables, e.g. two cables that are connected to the first electrical nodal point 105 of the first electrical control panel 100. This first electrical nodal point 105 for instance, as exemplarily depicted in Fig. 1, can feature a bus bar 106 for connecting cables e.g. the current output 108. The term "first electrical nodal point" should as such outline a common electrical potential; therefore also further connection points that feature a common potential with the first electrical nodal point 105, e.g., the connection point 107 shown in Fig. 1 can be assigned to the first electrical nodal point 105.

The first current transformer 108 of the first electrical control panel 100 serves for determining the current flowing through the first current output 108. For instance, this first current transformer 108 can be a cable gland transformer, through which the one or several cables of the first current outputs 104 are guided, the first current transformer 108 can also be implemented through one of the other current transformers as mentioned in general description of the invention. For instance, a current determined with the help of the first current transformer 108 can be measured through the over-current flowing through the first current output 104, so that, e.g., upon exceeding a default threshold value, the first electrical switching element 102 can be switched in the second state and thus the first current lead 101 be disconnected from the first electrical nodal point 105. For example, the first current transformer 108 can be connected with the first control unit 103, so that, for instance, the first control unit 103 based on current determined from the first current transformer 108 can carry out current switch-off, e.g. by switching the first electrical switching element 102 of the first control panel 100 into the second state.

Furthermore, the second control panel also comprises at least a first current lead 111, which, for instance, can be at least a first bus bar 111, at least a first electrical switching element 112, at least a first electrical nodal point 115 and at least a first current output 114.

The current flowing via the first bus bar 111 of the second control panel 110, for instance, is in phase with the current flowing via the first bus bar 101 of the first control panel 100, e.g. the two first bus bars 101, 111 Ll-conductor can be in an alternating current system. The first electrical switching element 112 of the second control panel, for instance, can be a first circuit breaker that in a first state electrically connects the first current lead 111 of the control panel 110 with the first electrical nodal point 115, and a second state disconnects this electrical connection. For instance, this first circuit breaker 112 can be driven by an optional separate control unit 113, as depicted in Fig. 1, but can also be operated manually.

Furthermore, the first electrical switching element 112 of the second control panel can also be connected with the first control unit 103 of the first control panel, e.g. via a wired or wireless connection, so that, for instance, the first control unit 103 on the basis of the current determined by the first current transformer 108 can switch off the current, e.g. by switching the first electrical switching element 112 of the second control panel 110 in the second state. For this case, the optional disconnect control unit 113 shown in Fig. 1 can be omitted.

Furthermore, the first current output 114 of the second control panel with the first electrical nodal point 105 of the first control panel 100 is connected via the bus bar 106 and the connection point 107. This first current output 114 can be implemented by means of cables, or several cables, for instance, for instance two cables, or through one or several bus bars.

Therefore, for instance, in the normal state the first circuit breaker 102 of the first control panel 100 can be switched in the first state and the first circuit breaker 112 of the second control panel 110 in the second state so that the first current output 104 of the first control panel is fed from the first bus bar 101 of the first control panel, and the second control panel 110 assumes a redundant function. Now, should the current supply via the first bus bar 101 of the first control panel fail due to a reason, e.g. due to a malfunction or maintenance work, then the first circuit breaker 112 of the second control panel can be switched in the first state and thereby, for instance, the first circuit breaker 102 of the first control panel 100 be switched in the second state so that now the first current output 104 of the first control panel is fed via the first bus bar 111 of the second control panel via the first current output 114 of the second control panel.

Therefore, the first bus bar 101 of the first control panel and the first bus bar 111 of the second control panel form a double bus bar.

It is hereby advantageous that again the first current transformer 108 of the first control panel 100 also when switching to the second control panel 110 can be used for determining the current flowing through the first current output 104 of the first control panel 100, for instance, for detecting an over-current. The first current transformer 108 for instance can also be connected with the optional control unit 113 of the second control panel 110, and hence also switch off the first circuit breakers 112 of the second control panel 110 in case of over current, or the first control unit can be connected with the second control panel 110 and initiate switch-off of the first circuit breaker 112 in case of over current.

The first circuit breaker 102 of the first control panel 100 and the first circuit breaker 112 of the second control panel 110 for instance can be a slidable circuit breaker, which can be pushed into and out of the respective control panel. Therefore, the circuit breakers or one of the circuit breakers can be replaced quickly.

Furthermore, the first control panel 100 and the second control panel 110 can be of the same or similar type, so that for the first control panel 100 and the second control panel 110 only one type approval test is required. Therefore, for instance, with the solution according to the invention, redundant control panels in one control panel configuration can be realised, whereby only one type approval test is needed for the respective control panel 100, 110 that leads to substantial cost reduction. Furthermore, for instance the circuit breaker 102, 112 between different control panels 100, 110 can be exchanged. For example, in a system, several first control panels 100 and several second control panels 110 can be arranged, whereby a first control panel 100 is respectively assigned to a redundant second control panel 110. If now, for instance, the circuit breaker fails in one of the first control panels 100 and in the associated second control panel 110 respectively, then a circuit breaker from another second (or first) control panel can be detached and the defect circuit breaker replaced with it, so that the current output 104 of the first control panel 100 can again be supplied with current. Thus, the fault tolerance of a control panel configuration can be increased.

The first control panel 100 and/or the second control panel 110, for instance, can be air-insulated, or gas-insulated, e.g. SF₆, but can also be insulated with other means, e.g. liquids or solid materials.

The first control panel 100 and the second control panel 110 can be set up at a certain distance from one another. Therefore, great design possibilities for placing the control panels of the control panel configuration, since they must not be directly adjacent to one another. For instance, a row of first control panels can be located on one side of the corridor, and on the opposite side of this corridor a row with second control panels can be located, of which respectively one is assigned to a first control panel of the first row. The spacing can be specified for instance by standards.

The first current transformer 108 for instance can be located at the bottom side of the first control panel 100, as shown in Fig. 1. Due to attachment at the bottom side, the accessibility and thus maintainability of the current transformer 108 can be improved in contrast to an attachment in the control panel itself.

Furthermore, the first current transformer 108 can be pivotally mounted, as shown by means of bearing 109 in Fig. 1, so that the first current transformer 108 can be swivelled into the first control panel 100. For this purpose, the first control panel 100 can feature a flap for opening the control panel and swivelling in or out of the first current transformer 108 (not shown in Fig. 1). Therefore, the first current transformer 108 e.g. during transport of the first control panel 100 can be swivelled or folded into a position within the first control panel 100, so that the first current transformer 108 is protected, and upon connection of the first control panel 100 the first current transformer 108 can again be swivelled outwards, and for instance after swivelling out by the first current transformer 108 the cables of the current outputs 104 can be guided to the first electrical nodal point 105.

Fig. 1 shows only a single-phase system exemplarily, however, each of the control panels 100, 110 can also be designed for several phases, e.g. for two or three-phase systems.

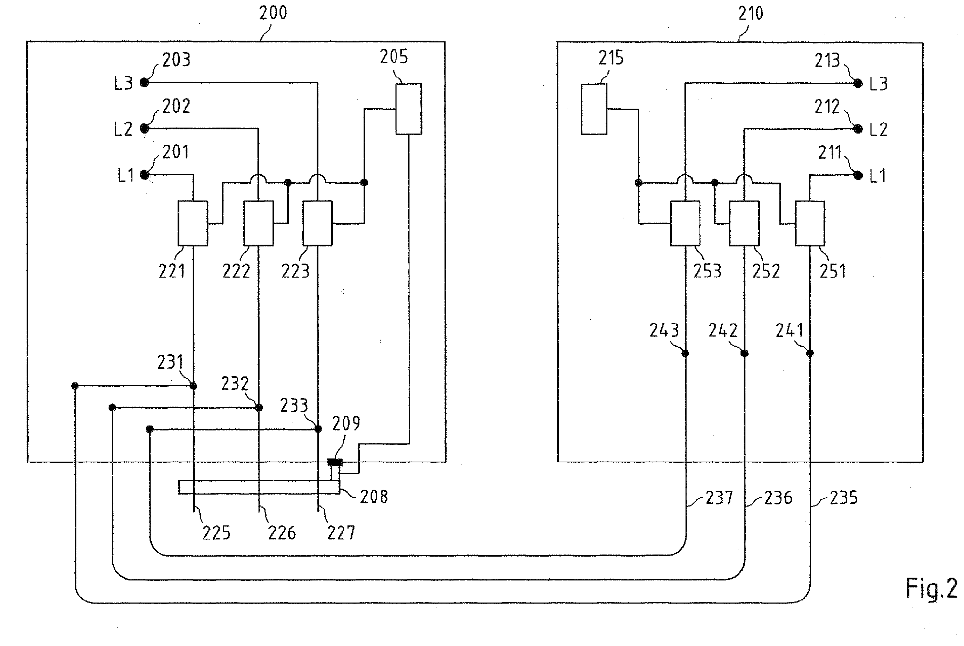

Figure 2 shows a schematic illustration of a second exemplary embodiment of the control panel configuration according to the invention for medium and/or high voltage, whereby the control panel configuration comprises a first control panel 200 and at least a further control panel 210.

The first control panel comprises a first electrical switching element 221, a second electrical switching element 222 and a third switching element 223 for respectively switching a phase (Ll, L2, L3) of the first, second and third current lead 201, 202, 203, whereby the first switching element 221 is connected via a first electrical nodal point 231 with a first current output 225, the second switching element 222 is connected via a second electrical nodal point 232 with a second current output 226, and the third switching element 223 is connected via a third electrical nodal point 233 with a third current output 227, whereby the switching elements 221, 222 and 223 can form a three phase component, e.g. a three phase circuit breaker. A common, three-phase current transformer determines the current flowing through the three current outputs 225, 226, 227, so that in the cases of an over-current the corresponding electrical switching unit 221, 222, 223, 251, 252, 253 can be switched off, e.g. with the help of the control unit 205, 215. Instead of a three-phase current transformer, 208 also single-phase current transformers can be used. The current transformer 208 as the current transformer 108 already described in Fig. 1 can be designed as a cable gland transformer, further, the explanations mentioned about the first current output 108 in the first exemplary embodiment apply respectively also to the current outputs 225, 226, 227 just as they apply to the three electrical switching elements 221, 222, 223 as explained initially regarding the first electrical switching element 102 is based on the first exemplary embodiment, this applies also to the current supplies 201, 202, 203 and electrical nodal points 231, 232, 233 and control unit 205.

As such, the first current transformer 208 can again be pivotally mounted in a bearing 209, analogously as initially described in the first exemplary embodiment. The second control panel 210 is similar in design to the first control panel, comprises a first, second and third electrical switching element 251, 252, 253 for switching the first, second and third phase L1, L2, L3 of the first, second and third current lead 211, 212, 213 on the respective first, second and third electrical nodal points 241, 242, 243 of the second control panel 210, whereby the switching elements 251, 252 and 253 can form a three phase component, e.g. a three phase circuit breaker. Each of the first, second and third electrical nodal points 241, 242, 243 of the second control panel 210 is connected with one of the first, second and third current outputs 235, 236, 237 of the second current panel 210, whereby again this first current output 235 is electrically connected with the first electrical nodal point 231, this second current output 236 with the second electrical nodal point 232, and this third current output 237 with the third electrical nodal point 233. Furthermore, the above explanations apply respectively also to the current outputs 235, 236, 237, which apply to the first current output 114 of the second control panel 110 of the first exemplary embodiment, likewise for the three electrical switching elements 251, 252, 253 the explanations stated initially apply to the first electrical switching element 112 based on the first exemplary embodiment, this applies also to the current supplies 211, 212, 213 and electrical nodal points 241, 242, 243 and control unit 215.

The first control panel 200 and/or the second control panel 210, for instance, can be air-insulated, or gas-insulated, e.g. SF₆, but can also be insulated with other means, e.g. liquids or solid materials.
The explanations about the first single-phase exemplary embodiment shown in Fig. 1 can be transferred equally to the individual phases of the three phase system in Fig. 2, particularly based on the fault tolerance and free spatial design possibilities for configuration of the control panels 200, 210, e.g. in a certain spacing relative to one another, whereby also again several first and second control panels can be brought respectively in one row. As such, also the disconnecting control unit 215 shown in Fig. 2 in the second control panel 210 as described initially depict an optional variant, so that this optional disconnecting control unit 215 can also be omitted and activation of the first, second and third electrical switching elements 251, 252, 253 of the second control panel 210 can also be carried out by the first control unit 205 placed in the first control panel 200.

## Claims

1. A control panel configuration for medium- and/or high voltage comprising a first control panel and at least a further control panel, whereby each of the first and of the at least one further control panel at least a current lead, at least an electrical switching element, at least an electrical nodal point, and at least respectively comprises a current output connected with one of the at least one first electrical nodal point, whereby each of the at least one electrical switching element is connected with respectively one of the at least one current lead and with respectively one of the at least one electrical nodal point, and whereby each of the at least one current output of the at least one further control panel is connected with respectively one electrical nodal point of the at least one electrical nodal point of the first control panel, and whereby the first control panel at least comprises a current transformer for determining at least one current flowing through the at least one first current output of the first control panel, whereby at least one of the at least one current lead is at least one bus bar, and wherein at least one of the at least one bus bar of the first control panel with respectively one of the at least one bus bar of the at least one further control panel depicts a double bus bar.

2. A control panel configuration according to Claim 1, **characterised in that** the at least one electrical switching element is at least a circuit breaker.

3. A control panel configuration according to Claim 2, **characterised in that** at least one of the at least one circuit breakers can be pulled out of and pushed into the respective control panel.

4. A control panel configuration according to one of the Claims 1-3, **characterised in that** at least one of the at least one current transformer is located on the bottom side of the first control panel and is pivotally mounted on the control panel, so that the at least one of the at least one current transformer is in a first swivelled-out state outside the control panel, and in a second swivelled-in state within the control panel.

5. A control panel configuration according to one of the Claims 1-4, **characterised in that** at least one of the at least one current output is at least a cable or at least a bus bar.

6. A control panel configuration according to Claim 5, **characterised in that** at least one of the at least one current transformer is a cable gland transformer, through which the at least one current output of the first control panel is guided.

7. A control panel configuration according to one of the Claims 1-6, **characterised in that** the first control panel and at least one of the at least one further control panel are arranged separately from one another.
